# EUROPÄISCHE PATENTSCHRIFT

(11) **EP 1 831 593 B1**
(45) Veröffentlichungstag und Bekanntmachung des Hinweises auf die Patenterteilung: **02.09.2009**
(21) Anmeldenummer: 05850148.7
(22) Anmeldetag: 14.12.2005
(51) Int. Cl.: F16J 15/16, F16J 15/32, F16J 15/44, F16J 15/56, F16D 33/18

(54) **DICHTUNG FÜR WANDLERÜBERBRÜCKUNGSKUPPLUNG**
SEAL FOR TORQUE CONVERTER LOCKUP CLUTCH
GARNITURE D'ETANCHEITE POUR EMBRAYAGE DE PONTAGE DE CONVERTISSEUR

(30) Priorität: 24.12.2004 DE 102004062608
(43) Veröffentlichungstag der Anmeldung: 12.09.2007
(73) Patentinhaber: LuK Lamellen und Kupplungsbau Beteiligungs KG, 77815 Bühl (DE)
(72) Erfinder: KRAUSE, Thorsten, 77815 Bühl (DE); ENGELMANN, Dominique, F-67850 Offendorf (FR)
(86) Internationale Anmeldenummer: PCT/DE2005/002251
(87) Internationale Veröffentlichungsnummer: WO 2006/066547

(56) Entgegenhaltungen:
- EP-A- 1 277 995
- EP-A- 1 331 414
- DE-A1- 3 331 673
- DE-A1- 4 412 927
- DE-A1- 10 314 338
- FR-A- 2 185 062
- US-A- 3 887 198
- US-B1- 6 588 763

## Beschreibung

Die Erfindung betrifft ein Verfahren und ein Dichtungssystem zum Dichten zwischen dem Kolben einer Wandlerüberbrückungskupplung und einer Nabe in einer hydrodynamischen Kupplung, insbesondere in einem Drehmomentwandler.

In modernen Drehmomentwandlern befindet sich eine Wandlerüberbrückungskupplung, die bei geringen Drehzahlunterschieden zwischen der Pumpe und der Turbine geschaltet wird, damit sich der Wirkungsgrad des Wandlers verbessert. Wird die Wandlerüberbrückungskupplung mittels des Öldrucks betätigt, so entsteht eine reibschlüssige Verbindung zwischen dem Wandlergehäuse zur Nabe, in die die Getriebeeingangswelle des nachgeordneten Getriebes eingreift. In dem Kraftfluss zwischen dem Wandlergehäuse und der Nabe kann auch noch ein Torsionsschwingungsdämpfer angeordnet sein.

Der Kolben der Wandlerüberbrückungskupplung ist in seinem Zentrum mit einer Bohrung versehen, mittels der er konzentrisch auf einer Nabe angeordnet werden kann. Diese Nabe kann sowohl eine Turbinennabe, als auch eine andere Nabe sein. Wichtig ist hierbei lediglich, dass der Kolben möglichst leicht axial verlagerbar ist, damit das Reibmoment zwischen dem Kolben und dem Wandlergehäuse möglichst feinfühlig eingestellt werden kann. Zum axialen Verlagern des Kolbens wird zu beiden Seiten des Kolbens ein unterschiedlicher Öldruck aufgebaut, so dass eine axiale Kraftkomponente entsteht. Am gebräuchlichsten ist die Druckbeaufschlagung, bei der in dem Bereich zwischen dem Kolben und der Wandlerturbine ein höherer Druck herrscht, als in dem Bereich zwischen dem Kolben und dem motorseitigen Wandlergehäuse.

Die DE 103 14 338 A1 zeigt einen hydrodynamischen Drehmomentwandler mit einer Wandlerüberbrückungskupplung, deren Kolben gegenüber dem Wandlergehäuse mittels einer in einer Ringnut des Kolbens untergebrachten Dichtung dichtend axial verlagerbar ist. Die DE 33 31 673 A1 zeigt eine Dichtungsanordnung, bei der in einer Ringnut eines Kolbens eine Dichtung angeordnet ist, die gegenüber einer Dichtfläche radial abdichtet und unter Druck gegenüber der Ringnut axial abdichtet.

Durch die axiale Bewegbarkeit des Kolbens auf der Nabe ist hier ein Leckage-Ölstrom möglich, weshalb bereits nach dem Stand der Technik zwischen der Bohrung des Kolbens und der ihr zugeordneten Nabe eine Dichtung angeordnet ist. Ein optimales Abdichten an dieser Stelle ist insofern hier schwierig, da zum einen eine möglichst leichtgängige axiale Verschiebbarkeit des Kolbens sichergestellt werden muss, und zum anderen der Leckage-Ölstrom möglichst klein gehalten werden sollte. Außerdem existiert das Problem, dass je nach der Betriebssituation des Drehmomentwandlers, zwischen dem Kolben und der Nabe unterschiedliche Drehzahlen existieren, wodurch Relativdrehbewegungen zwischen Kolben und Nabe vorhanden sind. Nur wenn die Wandlerüberbrückungskupplung vollständig geschlossen ist, treten keine Relativdrehbewegungen auf.

Im Anfahrbereich liegen die Relativdrehzahlen zwischen dem Kolben und der Nabe bei ca. 600 bis 2500 UPM; im Hauptfahrbereich liegen die Relativdrehzahlen immer noch bei 10 bis 60 UPM. Dieses bedeutet, dass die Dichtung neben ihrer eigentlichen Funktion des Abdichtens auch dauerhaft haltbar bei Relativdrehzahlen sein muss, denn dieses Bauteil ist wegen der geschlossenen Form des Drehmomentwandlers nicht austauschbar.

Um ein komfortables Einregeln der Wandlerüberbrückungskupplung bei geringen Drehmomenten (speziell im Schub) zu gewährleisten, ist es erforderlich, dass die Dichtung schon bei sehr geringen Differenzdrücken beidseits des Kolbens (< 0,1 bar) exakt abdichtet. Ist dies nicht der Fall, so erfolgt an der Dichtung eine Leckage, die bei weiter steigendem Druck spontan - also nicht vorhersehbar - sich sprunghaft reduziert. Wegen der im Wesentlichen konstanten Pumpenkennlinie der Ölförderpumpe, verursacht das spontane Abdichten zwischen dem Kolben und der Nabe einen Sprung in dem Differenzdruck zwischen den beiden Kolbenaußenflächen, wodurch zugleich auch ein spontanes, stärkeres Anpressen des Kolbens erfolgt, wodurch wiederum ein verstärktes Reibmoment entsteht. Dieser Reibmomentsprung führt zu einem Ruck, der vom Fahrer des Fahrzeuges als unangenehm empfunden wird.

Es ist deshalb Aufgabe der Erfindung das spontane Abdichten an der Dichtung zwischen dem Kolben und der Nabe zumindest zu reduzieren. Erfindungsgemäß wird mittels eines Verfahrens nach Anspruch 1 das spontane Abdichten derart reduziert, indem die Dichtung mittels einer Vorspannung an die Oberfläche der Kolbenbohrung angepresst wird. Diese Vorspannung wird dadurch erreicht, dass der Dichtring an seinem Außendurchmesser ein Übermaß hat, weshalb er im Wesentlichen mit der Drehzahl des Kolbens umläuft. Eine Relativdrehbewegung gibt es somit nur zwischen der Dichtung und dem Einstich für die Dichtung in der Nabe. Des Weiteren wird zwischen Dichtung und Nabe ein Leckagespalt gebildet.

Ferner wird die Aufgabe auch dadurch gelöst, indem eine hydrodynamishe Kupplung nach Anspruch 2 mit einem Dichtungssystem aufgebaut wird, bei dem die Dichtung mit einer im Wesentlichen zylindrischen Oberfläche an der Bohrung des Kolbens anliegt und zugleich endlos ausgebildet ist (als zylindrisch ist hierbei noch anzusehen, wenn der Krümmungsradius kleiner gleich dem Außendurchmesser der Dichtung ist). Beim Stand der Technik ist es nachteilig, dass die Dichtungen nicht geschlossen sind und dadurch eine Gerade oder einen schrägen Stoß aufweisen. Dieses führt speziell in Verbindung mit axialen Bewegungen und/oder Relativdrehzahlen zwischen Kolben und Nabe verstärkt zum spontanen Abdichten. Zwischen Dichtung und Nabe wird des Weiteren ein Leckagespalt gebildet.

Nachfolgen soll nun die Erfindung anhand der Figuren näher erläutert werden.

Es zeigen:
- Figur 1: ein Diagramm des Differenzdruckes über den Kolbenhub nach dem Stand der Technik,
- Figur 2: ein Diagramm des Leckage-Ölstroms über den Kolbenhub nach dem Stand der Technik ,
- Figur 3: ein Diagramm des Differenzdruckes über den Kolbenhub gemäß der vorliegenden Erfindung,
- Figur 4: ein Diagramm des Leckage-Ölstroms über den Kolbenhub gemäß der Erfindung,
- Figur 5: einen schematischen Schnitt durch einen Kolben und eine Nabe mit dem erfindungsgemäßen Dichtsystem,
- Figur 6: wie Figur 5, jedoch mit angefaster Dichtung,
- Figur 7: wie Figur 5, jedoch mit wechselseitig angefaster Dichtung,
- Figuren 8-10: weitere Ausgestaltungen der Dichtungsform,
- Figur 11: wie Figur 5, jedoch mit radial innerem zusätzlichen O-Ring,
- Figur 12: wie Figur 5, jedoch mit einem axial zusätzlichen O-Ring,
- Figur 13: ein Dichtungssystem, welches der Figur 11 ähnlich ist.

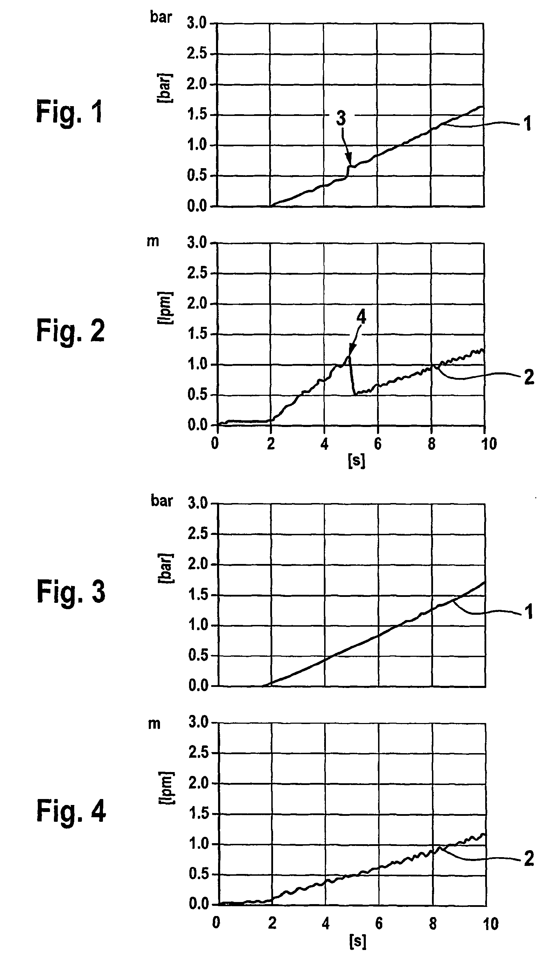

Die Figuren 1 und 2 bzw. die Figuren 3 und 4 muss man jeweils in einer Gesamtschau betrachten. Die Figuren 1 und 2 zeigen hierbei das Problem des spontanen Abdichtens, während die Figuren 3 und 4 das Dichtverhalten gemäß der Erfindung veranschaulichen.

In der Figur 1 kann man die Kennlinie 1 sehen, die den Differenzdruck auf den Kolben über den Kolbenweg s darstellt. Etwa bei dem Kolbenweg s=5 steigt die Kennlinie des Differenzdruckes auf einen Wert von 0,5 bar an.

In der Figur 2 ist die dazugehörige Kennlinie 2 der Ölleckage über Kolbenweg gezeigt. Hier kann man deutlich sehen, dass bei dem Kolbenweg s=5 die Leckage (in Liter pro Minute) von dem Wert etwa 1,2 plötzlich auf den Wert 0,5 abfällt. Das ist der Bereich 4 des spontanen Abdichtens, der in dem Diagramm der Figur 1 seine Ausprägung in dem Drucksprung 3 findet. Mit dem höheren Differenzdruck auf den Kolben geht nun auch ein höheres Reibmoment der Wandlerüberbrückungskupplung einher, wodurch insgesamt ein höheres Moment vom Motor zum Getriebe übertragen wird. Das hieraus resultierende Rucken während der Fahrt beeinträchtigt den Fahrkomfort. Besonderes nachteilig wäre es, wenn während einer Fahrt auch ebenso spontan sprunghafte Leckage-Zuwächse möglich wären, um dann wieder in ein spontanes Dichten übergehen würden. Dadurch wäre immer wieder ein Beschleunigungs- und auch Verzögerungsrucken zu spüren.

In den Diagrammen der Figuren 3 und 4 in dem Bereich des Kolbenweges von dem Wert s=2 bis s=10 ein im Wesentlichen lineares Verhalten, wodurch mit gesteuerter oder geregelter Differenzdruckzunahme auf den Kolben ein im Wesentlichen proportionales Reibmoment an der Wandlerüberbrückungskupplung möglich ist.

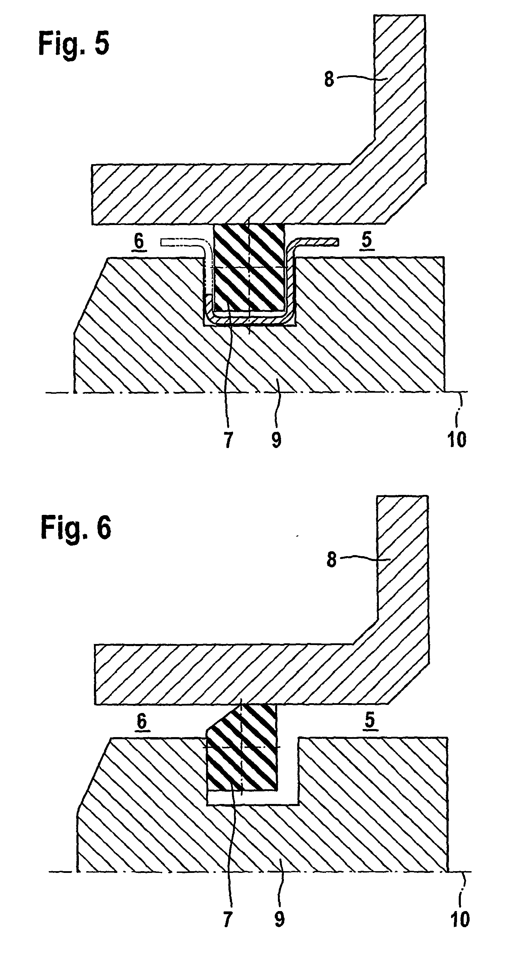

Die Figur 5 zeigt einen schematisierten Schnitt durch einen Kolben 8 einer Wandlerüberbrückungskupplung und eine Nabe 9. Es ist hierbei gut zu erkennen, dass die erfinderische Dichtung 7 an der Bohrung des Kolbens 8 anliegt, während die Dichtung 7 in dem Einstich der Nabe 9 mit Spiel behaftet ist (dieses Spiel ist aus Anschauungsgründen übertrieben dargestellt worden). Mittels einer Mittellinie bzw. Drehachse 10 soll angedeutet werden, dass die Nabe 9, der Kolben 8 und die Dichtung 7 konzentrisch zueinander angeordnet sind. In einem Bereich 5 herrscht ein höherer Öldruck als in einem Bereich 6, wodurch eine definierte Leckage um die Dichtung 7 herum zum geringeren Öldruck hin erfolgt. Vorteilhafterweise wird durch den Öldruck auf den Innendurchmesser der Dichtung 7 eine zusätzliche Anpressung der Dichtung 7 gegen den Kolben 8 bewirkt, wodurch eine zusätzliche Vorspannung der Dichtung 7 gegen den Kolben 8 erfolgt. Unabhängig davon ist durch die Dimensionierung des Außendurchmessers der Dichtung 7 bzw. der Dimensionierung des Innendurchmessers des Kolbens 8 bereits dann ein Vorspannung gegeben, wenn der Kolben 8 bei der Montage des Drehmomentwandlers über die Dichtung 7 geschoben wird.

Der in der Figur 5 gezeigte Spalt zwischen der Dichtung 7 und der Nabe 9 ist zwar übertrieben dargestellt, jedoch ist es erfindungsgemäß sinnvoll, hier einen Spalt zu gestalten, da dadurch die Fixierung der Dichtung 7 relativ zum Kolben 8 eindeutig wird. Der Leckageölstrom durch den Spalt zwischen der Dichtung 7 und der Nabe 9 von dem Bereich des höheren Drucks 5 zum Bereich 6 des geringeren Drucks, stellt eine Umwegstrecke dar, wodurch letzten Endes ein zuverlässiges, nicht-spontanes Abdichten möglich ist.

In der Figur 6 ist die Dichtung 7 mit einer Fase versehen, die vorzugsweise dem Bereich 6 zugewandt ist, der einen geringeren Druck aufweist. Es hat sich gezeigt, dass diese Fase ebenfalls dazu beiträgt, dass sich die Leckage im Wesentlichen proportional zur Druckdifferenz verhält.

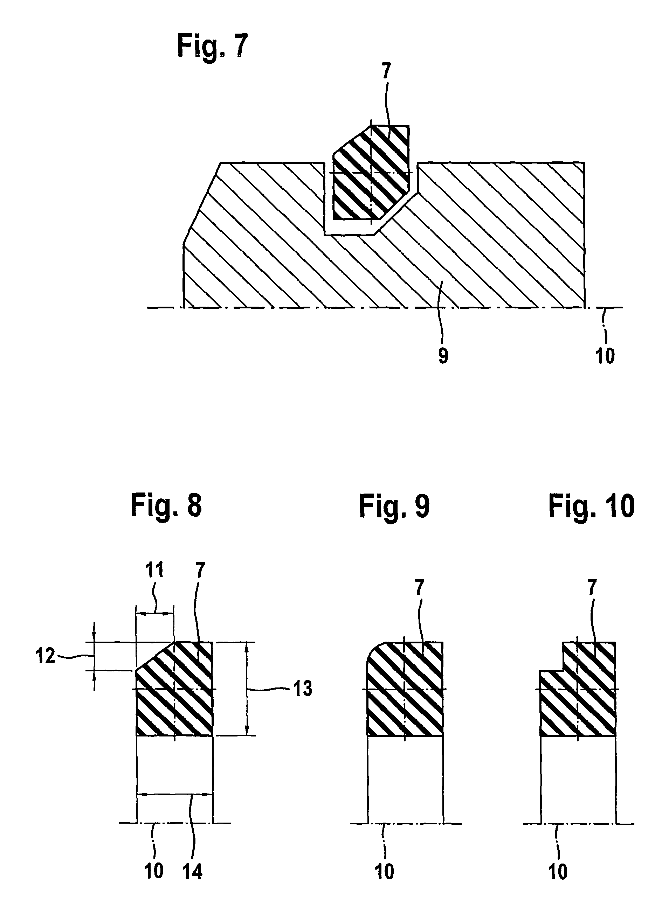

Mit den Figuren 8 bis 10 werden weitere Ausgestaltungen der Dichtung 7 gezeigt. Vorteilhafterweise sollte die Fasenhöhe 12 nur maximal 50% der Ringhöhe 13 tragen. Vorzugsweise sollte auch die Fasenbreite 11 nur maximal 50% der Ringbreite 14 betragen. Anstelle einer Fase kann aber auch - wie in Figur 9 gezeigt - ein Radius in dem Bereich der Dichtung 7 angebracht werden, der dem Druckbereich 6 zugewandt ist. Eine Fase und ein Radius haben zudem noch den Vorteil, dass sie beim Darüberschieben des Kolbens 8 eine Einfädelhilfe darstellen. In der Ausgestaltung der Figur 10 ist die Dichtung 7 mit einem Absatz versehen, wobei auch diese bereits genannten Vorteile einer Fase aufweist. In besonderen Fällen kann es aber auch erforderlich sein, dass die Fase bzw. der Radius oder der Absatz auch an der Seite der Dichtung 7 angeordnet sind, wo der Bereich 5 des höheren Drucks vorhanden ist. Auch ein beidseitiges Anordnen von Fase, Radius und Absatz kann möglich sein, wobei auch eine Kombination aus verschiedenen Randformen gewählt werden kann.

Mit der Figur 7 wird eine Ausgestaltung der Dichtung 7 gezeigt, die auch an ihrem Innendurchmesser mit einer Fase versehen ist. Dieses hat den Vorteil, dass die Dichtung 7 bei ihrer Montage auf die Nabe 9 nicht verkehrt herum montiert werden kann, wodurch die linksseitig gezeigte Fase dann auf die andere Seite zu Liegen käme.

Es soll in diesem Zusammenhang darauf hingewiesen werden, dass das bisher Gesagte auch entsprechend gilt, wenn die Dichtungsnut nicht in der Nabe 9, sondern im Kolben 8 angebracht ist.

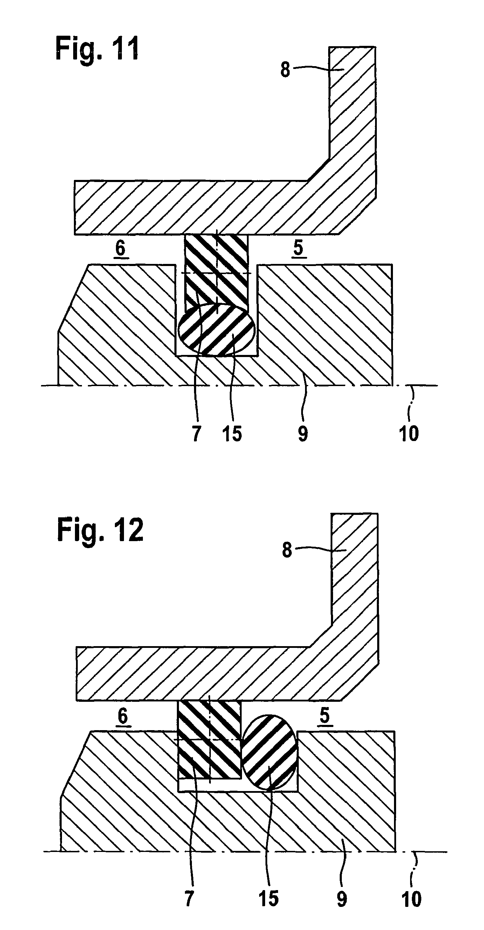

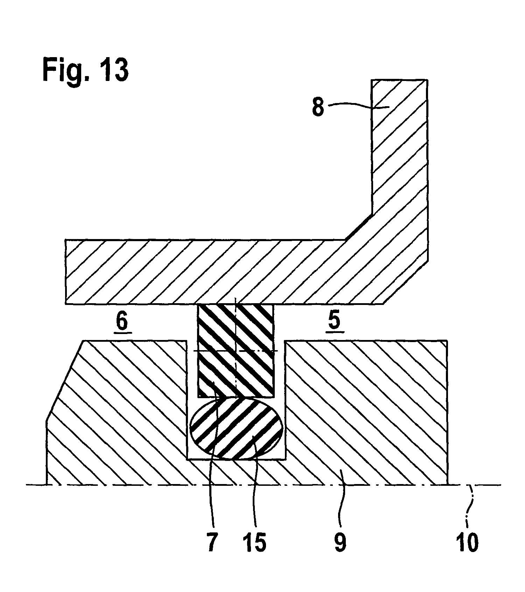

Den Figuren 11 bis 13 ist gemeinsam, dass zusätzlich zur Dichtung 7 auch noch ein O-Ring 15 zusätzlich noch Anwendung findet. In den Figuren 11 und 13 ist dieser O-Ring 15 radial innerhalb der Dichtung 7 angeordnet, während der O-Ring 15 in der Figur 12 axial neben der Dichtung 7 angeordnet ist. Den Figuren 11 bis 13 ist weiterhin gemeinsam, dass in Verbindung mit dem O-Ring 15 bei geringen Differenzdrücken ein absolutes Abdichten möglich ist. Der Unterschied von der Figur 11 zur Figur 13 besteht darin, dass in der Figur 11 der Dichtring 7 seinen Innendurchmesser mit einer Hohlkehle versehen ist, wodurch der O-Ring 15 im Wesentlichen flächig an dem Innendurchmesser der Dichtung 7 anliegt.

Auch in Verbindung mit den Figuren 11 bis 13 ist es denkbar, dass die Dichtung 7 - wie bereits beschrieben - mit einer Fase, Radius oder einem Absatz (oder Einstich) versehen ist.

### Bezugszeichenliste

- 1: Kennlinie Differenzdruck über Kolbenweg
- 2: Kennlinie Öl-Leckage über Kolbenweg
- 3: Drucksprung
- 4: Bereich des spontanen Abdichtens
- 5: Bereich des höheren Druckes
- 6: Bereich des geringeren Druckes
- 7: erfindungsgemäße Dichtung
- 8: Kolben der Wandlerüberbrückungskupplung
- 9: Nabe
- 10: Mittellinie/ Drehachse
- 11: Fasenbreite
- 12: Fasenhöhe
- 13: Ringhöhe
- 14: Ringbreite
- 15: O-Ring

## Patentansprüche

1. Verfahren zum Dichten in einer hydrodynamischen Kupplung mit einer Wandlerüberbrückungskupplung, wobei der Kolben (8) der Wandlerüberbrückungskupplung mit seiner konzentrischen Bohrung auf einer Nabe(9) angeordnet ist und hier mittels mindestens einer Dichtung abdichtet, **dadurch gekennzeichnet, dass** die Dichtung (7) mittels einer Vorspannung an die Bohrung des Kolbens (8) angepresst wird und zwischen Dichtung (7) und Nabe (9) ein Leckagespalt gebildet ist.

2. Hydrodynamische Kupplung mit einer Wandlerüberbrückungskupplung, umfassend einen Kolben (8), eine Nabe (9) und ein Dichtsystem, wobei der Kolben der Wandlerüberbrückungskupplung mit seiner konzentrischen Bohrung auf einer Nabe (9) angeordnet ist und sich zwischen der Nabe (9) und der Bohrung mindestens eine Dichtung (7) befindet, **dadurch gekennzeichnet, dass** die Dichtung (7) mit einer im Wesentlichen zylindrischen Oberfläche an der Bohrung anliegt und endlos ausgebildet ist und zwischen Dichtung (7) und Nabe (9) ein Leckagespalt gebildet ist.

3. Hydrodynamische Kupplung mit einem Dichtungssystem nach Anspruch 2, **dadurch gekennzeichnet, dass** zur Aufnahme der mindestens einen Dichtung (7) in der Nabe (9) ein Einstich angeordnet ist.

4. Hydrodynamische Kupplung mit einem Dichtungssystem nach Anspruch 2 oder 3, **dadurch gekennzeichnet, dass** die zylindrische Oberfläche in axialer Richtung kürzer ist als die axiale Erstreckung (14) der Dichtung (7).

5. Hydrodynamische Kupplung mit einem Dichtungssystem nach einem der Ansprüche 2 bis 4, **dadurch gekennzeichnet, dass** die zylindrische Oberfläche mit einer Fase begrenzt wird.

6. Hydrodynamische Kupplung mit einem Dichtungssystem nach einem der Ansprüche 2 bis 4, **dadurch gekennzeichnet, dass** die zylindrische Oberfläche mit einem Radius begrenzt wird.

7. Hydrodynamische Kupplung mit einem Dichtungssystem nach einem der Ansprüche 2 bis 4, **dadurch gekennzeichnet, dass** die zylindrische Oberfläche mit einem Absatz begrenzt wird.

8. Hydrodynamische Kupplung mit einem Dichtungssystem nach einem der Ansprüche 2 bis 7, **dadurch gekennzeichnet, dass** die Begrenzung (Fase, Radius, Absatz) dem Bereich (6) mit dem geringeren Druck zugewandt ist.

9. Hydrodynamische Kupplung mit einem Dichtungssystem nach einem der Ansprüche 2 bis 7, **dadurch gekennzeichnet, dass** die Begrenzung (Fase, Radius, Absatz) dem Bereich (5) mit dem höheren Druck zugewandt ist.

10. Hydrodynamische Kupplung mit einem Dichtungssystem nach einem der Ansprüche 2 bis 9, **dadurch gekennzeichnet, dass** die Dichtung (7) an ihrem Innendurchmesser mit einer Fase, Radius oder Absatz versehen ist.

11. Hydrodynamische Kupplung mit einem Dichtungssystem nach einem der Ansprüche 2 bis 10, **dadurch gekennzeichnet, dass** zusätzlich zu der ersten Dichtung (7) mit der zylindrischen Außenfläche, eine weitere Dichtung (15) angeordnet ist, die die erste Dichtung (7) radial mit einer Vorspannung beaufschlagt.

12. Hydrodynamische Kupplung mit einem Dichtungssystem nach Anspruch 11, **dadurch gekennzeichnet, dass** die Dichtung (7) mit der zylindrischen Außenfläche an ihrem Innendurchmesser mit einer umfänglichen, konkaven Form versehen ist.

13. Hydrodynamische Kupplung mit einem Dichtungssystem nach einem der Ansprüche 2 bis 11, **dadurch gekennzeichnet, dass** zusätzlich zu der ersten Dichtung (7) mit der zylindrischen Außenfläche, eine weitere Dichtung (15) angeordnet ist, die die erste Dichtung axial mit einer Vorspannung beaufschlagt.

14. Hydrodynamische Kupplung mit einem Dichtungssystem nach einem der Ansprüche 11 bis 13, **dadurch gekennzeichnet, dass** die weitere Dichtung (15) als O-Ring ausgebildet ist.

## Claims

1. Method for sealing in a hydrodynamic clutch having a torque converter lockup clutch, with the piston (8) of the torque converter lockup clutch being arranged with its concentric bore on a hub (9) and being sealed off here by means of at least one seal, **characterized in that** the seal (7) is pressed by means of a preload against the bore of the piston (8) and a leakage gap is formed between the seal (7) and the hub (9).

2. Hydrodynamic clutch having a torque converter lockup clutch, comprising a piston (8), a hub (9) and a sealing system, with the piston of the torque converter lockup clutch being arranged with its concentric bore on a hub (9) and with at least one seal (7) being situated between the hub (9) and the bore, **characterized in that** the seal (7) bears with a substantially cylindrical surface against the bore and is of endless design, and a leakage gap is formed between the seal (7) and the hub (9).

3. Hydrodynamic clutch having a seal system according to Claim 2, **characterized in that**, to hold the at least one seal (7), a recess is arranged in the hub (9).

4. Hydrodynamic clutch having a seal system according to Claim 2 or 3, **characterized in that** the cylindrical surface is shorter in the axial direction than the axial extent (14) of the seal (7).

5. Hydrodynamic clutch having a seal system according to one of Claims 2 to 4, **characterized in that** the cylindrical surface is delimited by a chamfer.

6. Hydrodynamic clutch having a seal system according to one of Claims 2 to 4, **characterized in that** the cylindrical surface is delimited by a radius.

7. Hydrodynamic clutch having a seal system according to one of Claims 2 to 4, **characterized in that** the cylindrical surface is delimited by a shoulder.

8. Hydrodynamic clutch having a seal system according to one of Claims 2 to 7, **characterized in that** the delimitation (chamfer, radius, shoulder) faces towards the region (6) with the lower pressure.

9. Hydrodynamic clutch having a seal system according to one of Claims 2 to 7, **characterized in that** the delimitation (chamfer, radius, shoulder) faces toward the region (5) with the higher pressure.

10. Hydrodynamic clutch having a seal system according to one of Claims 2 to 9, **characterized in that** the seal (7) is provided, on its inner diameter, with a chamfer, radius or shoulder.

11. Hydrodynamic clutch having a seal system according to one of Claims 2 to 10, **characterized in that**, in addition to the first seal (7) with the cylindrical outer surface, a further seal (15) is provided which acts on the first seal (7) radially with a preload.

12. Hydrodynamic clutch having a seal system according to Claim 11, **characterized in that** the seal (7) with the cylindrical outer surface is provided, on its inner diameter, with a circumferential concave shape.

13. Hydrodynamic clutch having a seal system according to one of Claims 2 to 11, **characterized in that**, in addition to the first seal (7) with the cylindrical outer surface, a further seal (15) is provided which acts on the first seal (7) axially with a preload.

14. Hydrodynamic clutch having a seal system according to one of Claims 11 to 13, **characterized in that** the further seal (15) is embodied as an O ring.

## Revendications

1. Procédé pour réaliser l'étanchéité dans un embrayage hydrodynamique avec un embrayage de pontage de convertisseur, le piston (8) de l'embrayage de pontage de convertisseur étant disposé avec son alésage concentrique sur un moyeu (9) et réalisant l'étanchéité dans ce cas au moyen d'au moins une garniture d'étanchéité, **caractérisé en ce que** la garniture d'étanchéité (7) est pressée au moyen d'une précontrainte contre l'alésage du piston (8) et une fente de fuite est formée entre la garniture d'étanchéité (7) et le moyeu (9).

2. Embrayage hydrodynamique comprenant un embrayage de pontage de convertisseur comprenant un piston (8), un moyeu (9) et un système d'étanchéité, le piston de l'embrayage de pontage de convertisseur étant disposé avec son alésage concentrique sur un moyeu (9) et au moins une garniture d'étanchéité (7) se trouvant entre le moyeu (9) et l'alésage, **caractérisé en ce que** la garniture d'étanchéité (7) s'applique avec une surface essentiellement cylindrique sur l'alésage et est réalisée sans fin, et une fente de fuite est formée entre la garniture d'étanchéité (7) et le moyeu (9).

3. Embrayage hydrodynamique comprenant un système d'étanchéité selon la revendication 2, **caractérisé en ce qu'**une encoche est réalisée dans le moyeu (9) pour recevoir l'au moins une garniture d'étanchéité (7).

4. Embrayage hydrodynamique comprenant un système d'étanchéité selon la revendication 2 ou 3, **caractérisé en ce que** la surface cylindrique dans la direction axiale est plus courte que l'étendue axiale (14) de la garniture d'étanchéité (7).

5. Embrayage hydrodynamique comprenant un système d'étanchéité selon l'une quelconque des revendications 2 à 4, **caractérisé en ce que** la surface cylindrique est limitée par un biseau.

6. Embrayage hydrodynamique comprenant un système d'étanchéité selon l'une quelconque des revendications 2 à 4, **caractérisé en ce que** la surface cylindrique est limitée par un rayon.

7. Embrayage hydrodynamique comprenant un système d'étanchéité selon l'une quelconque des revendications 2 à 4, **caractérisé en ce que** la surface cylindrique est limitée par un épaulement.

8. Embrayage hydrodynamique comprenant un système d'étanchéité selon l'une quelconque des revendications 2 à 7, **caractérisé en ce que** la limitation (biseau, rayon, épaulement) est tournée vers la région (6) de plus faible pression.

9. Embrayage hydrodynamique comprenant un système d'étanchéité selon l'une quelconque des revendications 2 à 7, **caractérisé en ce que** la limitation (biseau, rayon, épaulement) est tournée vers la région (6) de plus grande pression.

10. Embrayage hydrodynamique comprenant un système d'étanchéité selon l'une quelconque des revendications 2 à 9, **caractérisé en ce que** la garniture d'étanchéité (7) est pourvue sur son diamètre intérieur d'un biseau, d'un rayon ou d'un épaulement.

11. Embrayage hydrodynamique comprenant un système d'étanchéité selon l'une quelconque des revendications 2 à 10, **caractérisé en ce qu'**en plus de la première garniture d'étanchéité (7) avec la surface extérieure cylindrique, on prévoit une autre garniture d'étanchéité (15) qui sollicite radialement la première garniture d'étanchéité (7) avec une précontrainte.

12. Embrayage hydrodynamique comprenant un système d'étanchéité selon la revendication 11, **caractérisé en ce que** la garniture d'étanchéité (7) avec la surface extérieure cylindrique présente sur son diamètre intérieur une forme concave périphérique.

13. Embrayage hydrodynamique comprenant un système d'étanchéité selon l'une quelconque des revendications 2 à 11, **caractérisé en ce qu'**en plus de la première garniture d'étanchéité (7) avec la surface extérieure cylindrique, on prévoit une autre garniture d'étanchéité (15) qui sollicite la première garniture axialement avec une précontrainte.

14. Embrayage hydrodynamique comprenant un système d'étanchéité selon l'une quelconque des revendications 11 à 13, **caractérisé en ce que** l'autre garniture d'étanchéité (15) est réalisée sous forme de joint torique.
